# EUROPÄISCHE PATENTANMELDUNG

(11) **EP 4 647 307 A1**
(43) Veröffentlichungstag der Anmeldung: **12.11.2025**
(21) Anmeldenummer: 25173660.9
(22) Anmeldetag: 30.04.2025
(51) Int. Cl.: B60T 7/22, B60R 21/00, B60T 8/1755, B60T 8/32, B60W 30/09, E02F 9/08, E02F 9/20, E02F 9/26, G01S 13/931, E02F 9/22, B60W 50/14

(54) **ARBEITSFAHRZEUG MIT AUTOMATISCHER ABSCHALTFUNKTION FÜR EINE BREMSASSISTENTENVORRICHTUNG**

(30) Priorität: 08.05.2024 DE 102024112935
(71) Anmelder: Wacker Neuson Linz GmbH, 4063 Hörsching (AT)
(72) Erfinder: ARTNER, Maximilian, 4063 Hörsching (AT); MITTERMAYR, Thomas, 4101 Feldkirchen an der Donau (AT)
(74) Vertreter: Müller Hoffmann & Partner

(57) **Zusammenfassung**

Arbeitsfahrzeug, mit einer ersten Fahreinheit (1) und einer zweiten Fahreinheit (2); wobei beide Fahreinheiten (1, 2) jeweils einen eigenen Antrieb aufweisen; eine der Fahreinheiten (1) einen Fahrersitz aufweist; wobei die andere der Fahreinheiten (2) eine anhebbare Mulde (6) trägt; wobei zwischen den beiden Fahreinheiten (1, 2) ein Gelenk (4) angeordnet ist, zum Koppeln der beiden Fahreinheiten (1, 2) derart, dass die beiden Fahreinheiten (1, 2) um wenigstens eine Hochachse (Z) des Arbeitsfahrzeugs relativ zueinander bewegbar sind; wobei eine Bremsassistenzvorrichtung (20) vorgesehen ist, zum Erkennen fahrkritischer Situationen und zum Erzeugen eines Warnsignals, wenn eine fahrkritische Situation erkannt wurde; und wobei eine Abschaltvorrichtung (23) vorgesehen ist, zum automatischen Abschalten der Bremsassistenzvorrichtung (20), wenn eine Abschaltbedingung erfüllt ist.

## Beschreibung

Die Erfindung betrifft ein Arbeitsfahrzeug, nämlich eine mobile Arbeitsmaschine bzw. Baumaschine wie einen Dumper, einen Radlader oder einen Teleskopradlager. Insbesondere betrifft die Erfindung ein knickgelenktes Arbeitsfahrzeugs.

Mobile Arbeitsfahrzeuge bzw. Arbeitsmaschinen weisen in der Regel einen hydrostatischen Fahrantrieb, zum Teil mit elektrohydraulischer Ansteuerung, oder auch einen elektrifizierten Fahrantrieb auf. Die Bedienung der Maschine (Vorgabe der Fahrgeschwindigkeit bzw. deren Reduzierung und Bremsen sowie Lenken) obliegt vollständig dem Fahrer. Zur Überwachung des Umfelds ist der Fahrer auf seine Sinnesorgane (Sehen, Hören) angewiesen. Dabei kann er durch Rückfahrspiegel und bisweilen auch Rückfahr- oder Bird-View-Kameras unterstützt werden.

Derartige Arbeitsfahrzeuge weisen häufig eine besondere Beweglichkeit auf, um auch in schwierigem Gelände gut fahrbar zu sein. Bei dieser Bauart können die Arbeitsfahrzeuge einen Hinterwagen (z.B. eine erste Fahreinheit) und einen Vorderwagen (z.B. eine zweite Fahreinheit) aufweisen. Zwischen dem Vorderwagen und dem Hinterwagen kann ein Gelenk angeordnet werden, zum Koppeln des Vorderwagens mit dem Hinterwagen, derart, dass der Vorderwagen und der Hinterwagen um wenigstens eine Hochachse des Arbeitsfahrzeugs relativ zueinander bewegbar sind. Da somit der Vorderwagen und der Hinterwagen relativ zueinander eine Art "Knickbewegung" machen können, wird in diesem Zusammenhang auch von knickgelenkten Arbeitsfahrzeugen gesprochen. Das Knicken zwischen Vorderwagen und Hinterwagen ermöglicht eine Lenkbewegung und damit Kurvenfahrten, da die an Vorder- und Hinterwagen angeordneten Räder bzw. Radachsen in einem Winkel zueinander gestellt werden können.

Die Lenkung des Arbeitsfahrzeugs kann z.B. durch einen hydraulischen Zylinder bewirkt werden, der am Knickgelenk angeordnet ist und zwischen den beiden Fahreinheiten durch das Knickgelenk verbundenen Fahreinheiten wirkt, um den Winkel zwischen den beiden Fahreinheiten zu verstellen.

Zur Verbesserung der Geländegängigkeit ist es darüber hinaus bekannt, das Gelenk derart auszubilden, dass es auch eine Relativbewegung zwischen Vorderwagen und Hinterwagen bzw. erster und zweiter Fahreinheit um die Längsachse des Arbeitsfahrzeugs zulässt. Diese Relativbewegung wird auch als "Pendeln" bezeichnet. Ein derart kombiniertes Gelenk wird dementsprechend auch als "Knick-Pendel-Gelenk" benannt. Beispiele dafür sind aus der DE 101 30 530 C1 oder der EP 2 218 835 A1 bekannt.

Eine der Fahreinheiten des Arbeitsfahrzeugs kann beispielsweise den Fahrerstand (Fahrersitz) bzw. die Fahrerkabine tragen, während an der anderen Fahreinheit ein geeignetes Arbeitswerkzeug, wie z.B. eine Laderschaufel (für einen Lader) oder eine Mulde ( für einen Dumper) angebracht werden kann.

Der Fahrzeugaufbau macht eine vollständige Einsicht in den Gefahrenbereich vor, hinter oder neben der Maschine durch den Fahrer häufig unmöglich oder schwierig. So ist es für den Fahrer aus seiner Position aus dem Fahrersitz heraus oft nur eingeschränkt möglich, bei einem Dumper über die mit Schüttgut befüllte Mulde hinwegzusehen. Gerade Hindernisse, die dicht vor dem Fahrzeug stehen, können vom Fahrer dadurch nicht erkannt werden.

In Verbindung mit einem häufigen Rangierbetrieb können dadurch leicht Gefahrensituationen für Menschen und Fahrzeuge in unmittelbarer Umgebung oder auch für die Maschine und deren Fahrer selbst entstehen. Auch ist der Fahrer nur in der Lage, zu einem bestimmten Zeitpunkt lediglich einen einzelnen Bereich zu überwachen, während sich in anderen, vom Fahrer nicht überwachten Bereichen unbemerkt neue Gefahrensituationen ergeben können. Gefahrensituationen können dabei insbesondere durch Objekte im Nahbereich direkt an der Maschine entstehen, oder auch durch weiter entfernte Objekte, die sich aber mit entsprechender Relativgeschwindigkeit auf die Maschine zu bewegen, so dass es zu einer Kollision kommen könnte. In jedem Fall ist eine Kollision mit einem Hindernis zu vermeiden oder wenigstens derart abzuschwächen, dass kein Schaden an Mensch und Maschine entstehen kann.

Zur Lösung dieses Problems ist z.B. aus der DE 10 2022 110 385 A1 ein Bremsassistent mit einer Kollisionswarnvorrichtung bekannt.

Der Bremsassistent benutzt in erster Linie Radarsensoren, um Hindernisse in der näheren und fernen Umgebung des Arbeitsfahrzeugs zu erkennen und gegebenenfalls in den Fahrbetrieb einzugreifen. Zum Beispiel ist der Bremsassistent in der Lage, eigenständig die Fahrgeschwindigkeit des Fahrzeugs zu reduzieren oder das Fahrzeug zu stoppen.

Der bekannte radarbasierte Bremsassistent ist dabei dauerhaft, während des gesamten Fahrbetriebs, aktiv. Dies kann zu unerwünschten Meldungen (akustische oder optische Signale) und Bremsungen des Fahrzeugs führen.

Zum Beispiel kann beim Anheben einer auf dem Fahrzeug vorhandenen Mulde die Schüttkante der Mulde in den Überwachungsbereich eines dort angeordneten Radarsensors schwenken, so dass die Mulde fälschlicherweise als Hindernis erkannt wird. Auch aus der Mulde herabfallendes Material kann als Hindernis erkannt werden und eine Falschmeldung auslösen.

Beim Befahren eines abschüssigen Geländes besteht die Möglichkeit, dass die Radarsensoren den Übergang des Gefälles in die Ebene als Hindernis interpretieren, da die Sensoren den Bereich vor dem Fahrzeug quasi in Sichtrichtung auswerten. Auch das kann zu einer Falschmeldung oder gar zum Abbremsen des Fahrzeugs führen.

Der Erfindung liegt daher die Aufgabe zugrunde, den Bremsassistenten derart weiterzuentwickeln, dass derartige Fehlalarme vermieden werden können.

Die Aufgabe wird erfindungsgemäß durch ein Arbeitsfahrzeug mit den Merkmalen von Anspruch 1 gelöst. Vorteilhafte Ausgestaltungen sind in den abhängigen Ansprüchen angegeben.

Es wird ein Arbeitsfahrzeug angegeben, mit einer ersten Fahreinheit und einer zweiten Fahreinheit; wobei beide Fahreinheiten jeweils einen eigenen Antrieb aufweisen; wobei eine der Fahreinheiten einen Fahrersitz aufweist; wobei die andere der Fahreinheiten eine anhebbare Mulde trägt; wobei zwischen den beiden Fahreinheiten ein Gelenk angeordnet ist, zum Koppeln der beiden Fahreinheiten derart, dass die beiden Fahreinheiten um wenigstens eine Hochachse des Arbeitsfahrzeugs relativ zueinander bewegbar sind; wobei eine Bremsassistenzvorrichtung vorgesehen ist, zum Erkennen fahrkritischer Situationen und zum Erzeugen eines Warnsignals, wenn eine fahrkritische Situation erkannt wurde; und wobei eine Abschaltvorrichtung vorgesehen ist, zum automatischen Abschalten der Bremsassistenzvorrichtung, wenn eine Abschaltbedingung erfüllt ist.

Es handelt sich bei dem Arbeitsfahrzeug dementsprechend um ein knickgelenktes Arbeitsfahrzeug, derart, dass die beiden Fahreinheiten aufgrund des zwischen ihnen angeordneten Gelenks relativ zueinander bewegbar bzw. verschwenkbar sind. Dadurch ist es möglich, die an den Fahreinheiten vorgesehenen Räder bzw. Radachsen in einem Winkel zueinander zu stellen, um auf diese Weise eine Lenkwirkung beim Fortbewegen des Arbeitsfahrzeugs zu erreichen.

Insbesondere kann jede der Fahreinheiten einen eigenen Antrieb in Form von angetriebenen Rädern oder Radachsen aufweisen. Dieser Antrieb kann z.B. ein hydrostatischer Antrieb oder ein Elektroantrieb sein, der die Räder drehend antreibt. Im Fall eines hydrostatischen Antriebs muss darüber hinaus an geeigneter Stelle auf einer der Fahreinheiten ein Antriebsmotor, z.B. ein Dieselmotor vorgesehen sein, der eine Hydraulikpumpe antreibt, um auf diese Weise den erforderlichen Hydraulikdruck zu erzeugen, der die hydrostatischen Antriebe an den Rädern in an sich bekannter Weise versorgt. Die Räder bzw. Radachsen ihrerseits sind winkelmäßig starr an den sie tragenden Fahreinheiten befestigt. Das heißt, die Räder können nicht hinsichtlich eines Lenkwinkels relativ zu der sie tragenden Fahreinheit um die Hochachse verschwenkt werden, anders als dies z.B. bei einer Pkw-Lenkung der Fall ist.

Eine der Fahreinheiten kann einen Fahrersitz aufweisen, während die andere Fahreinheit ein Arbeitswerkzeug tragen kann. Das Arbeitswerkzeug kann ausgewählt sein aus der Gruppe Mulde, kippbare Mulde, Ladeschaufel, Teleskoparm.

Auf diese Weise kann das Arbeitsfahrzeug als mobile Arbeitsmaschine, wie z.B. als Dumper, Radlader oder Teleskoplader ausgebildet sein.

Der Fahrersitz ist als Aufenthaltsort für den Fahrer zu verstehen. Es kann sich dabei auch um einen Fahrerstand handeln. Ebenso ist es möglich, dass der Fahrersitz durch eine Fahrerkabine umschlossen ist, um den Fahrer vor äußeren Einflüssen zu schützen.

Die Bremsassistenzvorrichtung ist ausgebildet, um fahrkritische Situationen, insbesondere Hindernisse in Fahrtrichtung, zu erkennen und ein Warnsignal zu erzeugen. Aufgrund des Warnsignals sind verschiedene Maßnahmen möglich, wie insbesondere das Abbremsen des Fahrzeugs.

Erfindungsgemäß ist eine Abschaltvorrichtung vorgesehen, die die Bremsassistenzvorrichtung dann abschaltet, wenn eine vorgegebene Abschaltbedingung erfüllt ist. Wenn somit in dem System, z.B. in der Bremsassistenzvorrichtung oder einer geeigneten Steuereinrichtung eine entsprechend definierte Abschaltbedingungen als erfüllt angesehen wird, kann die Bremsassistenzvorrichtung abgeschaltet werden. Das Abschalten der Bremsassistenzvorrichtung erfolgt nur so lange, wie die Abschaltbedingung erfüllt ist. Sobald die Abschaltbedingung nicht mehr erfüllt ist, wird die Bremsassistenzvorrichtung wieder reaktiviert.

Unter dem Abschalten der Bremsassistenzvorrichtung ist nicht zu verstehen, dass die gesamte Bremsassistenzvorrichtung abgeschaltet werden muss. Vielmehr genügt ein Deaktivieren der Bremsassistenzvorrichtung. Es kommt lediglich darauf an, dass das gegebenenfalls erzeugte Warnsignal folgenlos bleibt, also keine der ansonsten von der Bremsassistenzvorrichtung veranlassten Maßnahmen ergriffen wird. So kann das Abschalten der Bremsassistenzvorrichtung bedeuten, dass kein Warnsignal mehr erzeugt wird. Ebenso ist es möglich, dass zwar ein Warnsignal von der Bremsassistenzvorrichtung erzeugt wird, das aber ohne die ansonsten vorgesehen Wirkung bleibt, also wirkungslos ist.

Insoweit stellt die Abschaltvorrichtung eine Art Deaktivierungs- bzw. Mute-Funktion zur Verfügung, mit deren Hilfe die Bremsassistenzvorrichtung für eine bestimmte Zeit und unter bestimmten Bedingungen ohne Wirkung bleibt, also quasi "stummgeschaltet" wird. Die Mute-Funktion kann automatisch aktiviert werden.

Durch das Warnsignal kann wenigstens eine der folgenden Aktionen ausgelöst werden: Erzeugen eines akustischen Signals, Erzeugen eines optischen Signals, Reduzieren der Fahrgeschwindigkeit, Stoppen des Arbeitsfahrzeugs. Wenn somit das Warnsignal vorliegt, können eine oder mehrere Maßnahmen ergriffen werden. Das Arbeitsfahrzeug kann abgebremst werden, insbesondere bis zum Stillstand. Auch ist es möglich, ein Losfahren des Fahrzeugs zu verhindern, wenn das Warnsignal vorliegt. Zudem kann der Bediener über ein akustisches oder optisches Signal informiert werden.

Die Abschaltbedingung kann ausgewählt sein aus der Gruppe: die Mulde wird angehoben, das Arbeitsfahrzeug fährt bergab, ein Anhänger ist an dem Arbeitsfahrzeug angekuppelt, manuelle Abschaltung durch einen Bediener.

Das Anheben der Mulde wurde oben bereits als problematisch erläutert, wenn dadurch Teile der Mulde, wie z.B. die Schüttkante, in den Erfassungsbereich eines dort angeordneten (Radar-)Sensors geschwenkt wird. Auch das aus der Mulde fallende Schüttgut kann eine Kollision vortäuschen, wenn es von dem Sensor erfasst wird.

Gleiches gilt für die Bergabfahrt, bei der durch die Neigung des Fahrzeugs und die damit verbundene Schrägstellung gegenüber der Horizontalen der vor dem Fahrzeug liegende Untergrund als Hindernis interpretiert werden kann, wie ebenfalls oben bereits erläutert.

Ein weiteres Kriterium kann es sein, wenn ein Anhänger an dem Arbeitsfahrzeug angekuppelt ist. Da sich der Anhänger in der Regel im Erfassungsbereich der Kollisionswarnsensorik befindet, kann er ebenfalls den Bremsassistenten auslösen, so dass ein Abschalten der Bremsassistenzvorrichtung sinnvoll sein kann, um Eingriffe der Bremsassistenzvorrichtung zu vermeiden.

Schließlich ist auch eine manuelle Abschaltung durch den Bediener möglich, wenn der Bediener keine Unterstützung durch den Bremsassistenten wünscht. Der Bediener kann z.B. durch Betätigen einer Taste oder eines Buttons auf einem Display die Bremsassistenzvorrichtung abschalten. Dabei kann die Abschaltung auch temporär, also während eines vorgegebenen Zeitraums, erfolgen und danach automatisch wieder aufgehoben werden, so dass der Bremsassistent nach Ablauf einer gewissen Zeit automatisch erneut aktiviert wird.

Zum Beispiel kann eine Mute-Taste im Cockpit bereitgestellt werden, mit der der Bediener kurzzeitig oder auch nur dann, während er die Mute-Taste drückt, den Bremsassistenten deaktiviert. Das kann hilfreich sein, um ein Annähern des Arbeitsfahrzeugs an andere Maschinen während eines Beladevorgangs zu ermöglichen. Der Bediener kann dann den Bremsassistenten für eine gewisse Zeit oder auch dauerhaft deaktivieren und nah an das Zielobjekt heranfahren. Nach Ablauf einer vorgegebenen Zeit kann der Bremsassistent wieder aktiviert.

Das Erfüllen der Abschaltbedingung kann abhängig von der Fahrtrichtung sein, derart, dass die Abschaltbedingung nur dann als erfüllt gilt, wenn in der jeweiligen Fahrtrichtung ein Nicht-Abschalten der Bremsassistenzvorrichtung zu einer Störung des Fahrbetriebs führen kann. Das bedeutet, dass der Bremsassistent bei Vorliegen einer erfüllten Abschaltbedingung nicht automatisch abgeschaltet wird, sondern nur dann, wenn in der jeweiligen Fahrtrichtung ein Problem auftreten kann, wie z.B. der als Hindernis interpretierte Untergrund bei einer Bergabfahrt. Die Deaktivierung des Bremsassistenten erfolgt somit nicht automatisch bei Erfüllen der Abschaltbedingung, sondern auch in Abhängigkeit von der Fahrtrichtung und der Relation von Fahrtrichtung und dem Problem, das ein Abschalten der Bremsassistenzvorrichtung bewirken könnte.

Bei einer entgegengesetzten Fahrtrichtung, bei der das Problem nicht auftritt (wenn z.B. die Mulde angehoben wird, jedoch in Fahrtrichtung gesehen hinter dem Fahrersitz, also nicht in Blickrichtung des Fahrers, angeordnet ist) erfolgt kein Abschalten der Bremsassistenzvorrichtung.

Ein automatisches Abschalten der Bremsassistenzvorrichtung kann bei dieser Variante dementsprechend nur dann erfolgen, wenn keine Nicht-Abschaltbedingung erfüllt ist, selbst wenn die Voraussetzungen zum Erfüllen der Abschaltbedingung gegeben sind, wobei die Nicht-Abschaltbedingung ausgewählt ist aus der Gruppe:
- Die Mulde ist, in der aktuellen Fahrtrichtung gesehen, hinter dem Fahrersitz angeordnet,
- Der Anhänger ist, in der aktuellen Fahrtrichtung gesehen, hinter dem Arbeitsfahrzeug angekuppelt,
- Das Arbeitsfahrzeug fährt bergauf.

Somit wird zusätzlich zu der eigentlichen Abschaltbedingung auch eine Nicht-Abschaltbedingung berücksichtigt, bei deren Vorliegen die Bremsassistenzvorrichtung nicht automatisch abgeschaltet wird, selbst wenn eine Abschaltbedingung erfüllt ist. Die Nicht-Abschaltbedingung berücksichtigt das Verhältnis der aktuellen Fahrtrichtung und dem Problem, das dem Erfüllen der Abschaltbedingung zugrunde liegt.

Umgekehrt kann aus der Tatsache, dass keine Nicht-Abschaltbedingung erfüllt ist, durch das System geschlossen werden, dass eine automatische Abschaltung der Bremsassistenzvorrichtung zulässig ist und durchgeführt werden kann.

Das Erkennen, ob die Nicht-Abschaltbedingung erfüllt ist, kann durch Auswertung verschiedener Sensoren und Fahrdaten ermöglicht werden. Wenn z.B. die Mulde, in Fahrtrichtung gesehen, hinter dem Fahrersitz angeordnet ist und das Fahrzeug somit in die von der Mulde entfernte Fahrtrichtung fährt, kann in dieser Fahrtrichtung auch dann kein Problem vorliegen, wenn die Mulde angehoben ist. Eine Kollision wäre ausgeschlossen. Gleiches gilt, wenn der Anhänger hinter dem Fahrzeug angekuppelt ist, also von dem Fahrzeug gezogen wird. Auch dann kann der Anhänger kein Hindernis sein, das ein Auslösen der Bremsassistenzvorrichtung rechtfertigen würde. Gleiches gilt für die Fahrt bergauf, bei der der Untergrund nicht ein Hindernis werden kann.

Die Erfassung der Fahrtrichtung kann zudem durch die Erfassung der Blickrichtung des Fahrers ergänzt werden. Hierzu kann berücksichtigt werden, in welche Blickrichtung der Fahrer beim bestimmungsgemäßen Gebrauch des Arbeitsfahrzeugs blickt, wenn er auf dem Fahrersitz sitzt.

So sind Arbeitsfahrzeuge (Dumper) bekannt, bei denen bei denen der Fahrersitz zwischen zwei Positionen verschwenkt werden kann. Der Fahrer kann so einerseits in Richtung der Mulde blicken und in diese Richtung fahren. Der Sitz kann aber auch um 180° geschwenkt werden, so dass der Fahrer eine freie Sicht hat und in diese Richtung fahren kann. Die Mulde befindet sich dann - in Fahrtrichtung gesehen - hinter dem Fahrersitz. Das System kann die Drehstellung des Sitzes erkennen, und die Bremsassistenzvorrichtung in die jeweilige Blickrichtung deaktivieren.

Es kann eine Anhebeerkennungseinrichtung vorgesehen sein, zum Erkennen von wenigstens einer angehobenen Position der Mulde, wobei durch die Anhebeerkennungseinrichtung die Abschaltbedingung als erfüllt gesetzt wird, wenn eine angehobene Position der Mulde erkannt wird. Dem entsprechend können auch mehrere Positionen oder ein Anhebevorgang der Mulde erkannt werden. Die Anhebeerkennungseinrichtung kann z.B. als Positionsschalter verwirklicht werden.

Es kann eine Anhängererkennungseinrichtung vorgesehen sein, zum Erkennen, dass ein Anhänger an dem Arbeitsfahrzeug angekuppelt ist, wobei durch die Anhängererkennungseinrichtung die Abschaltbedingung als erfüllt gesetzt wird, wenn erkannt wird, dass ein Anhänger angekuppelt ist.

Die Anhängererkennungseinrichtung kann eine Steckererkennungseinrichtung aufweisen, zum Erkennen, dass ein Anhängerstecker an einer Buchse des Arbeitsfahrzeugs angesteckt ist. Durch das Detektieren des Anhängersteckers kann der Bremsassistent auf der Seite des Anhängers deaktiviert werden. Anderenfalls würde, wenn ein Anhänger angehängt würde, die Sensorik des Bremsassistenten den vor dem Arbeitsfahrzeug befindlichen Anhänger als Objekt erkennen und Warnmeldungen bzw. Bremsungen einleiten.

Es kann eine Neigungserkennungseinrichtung vorgesehen sein, zum Erkennen einer Neigung des Arbeitsfahrzeugs bei einer Bergabfahrt, wobei durch die Neigungserkennungseinrichtung die Abschaltbedingung als erfüllt gesetzt wird, wenn eine Bergabfahrt erkannt wird. Die Neigungserkennungseinrichtung ist z.B. in der Lage, die aktuelle Fahrtrichtung mit der Neigung zu koppeln und daraus zu schließen, dass eine Bergabfahrt vorliegt. Dazu kann die Neigungserkennungseinrichtung die Neigung des Fahrzeugs gegenüber der Horizontalen, insbesondere um die Nickachse bzw. Querachse erkennen.

Beim Übergang von einer Neigung in die Ebene/Steigung würde der Radarsensor den Fahrweg als Hindernis erkennen. Deshalb wird der Bremsassistent in der entsprechenden Richtung (in Richtung der Bergabfahrt) deaktiviert, um keine Falschmeldung zu erhalten. Hierzu kann an dem Fahrzeug ein Neigungssensor als Teil der Neigungserkennungseinrichtung vorgesehen sein, der erkennt, ob das Fahrzeug sich aktuell in einer Bergabfahrt befindet. Die Erkennung der Bergabfahrt kann durch die Verknüpfung mit den Fahrzeugdaten (Maschinenfahrrichtung bzw. Fahrtrichtungswunsch; Stellung bzw. Ausrichtung des Fahrersitzes) verknüpft werden.

Es kann eine Abschaltanzeigeeinrichtung vorgesehen sein, zum Anzeigen von wenigstens einem der folgenden Betriebszustände: die Bremsassistenzvorrichtung ist abgeschaltet; eine Abschaltbedingung ist erfüllt; wenigstens eine der Abschaltbedingungen, die erfüllt sind.

Die Abschaltanzeigeeinrichtung kann z.B. ein Display aufweisen, das einen Hinweis auf den deaktivierten Bremsassistenten gibt, wenn die Abschaltbedingung erfüllt ist. Dementsprechend kann die Abschaltanzeigeeinrichtung allgemein darüber informieren, dass die Bremsassistenzvorrichtung abgeschaltet ist. Ergänzend oder alternativ kann angezeigt werden, dass eine Abschaltbedingung erfüllt ist. Weiterhin ergänzend oder alternativ kann präzise darüber informiert werden, welche der Abschaltbedingungen erfüllt ist. Der Bediener erhält damit einen Hinweis auf den Grund für die Deaktivierung der Bremsassistenzvorrichtung.

Die Bremsassistenzvorrichtung kann eine Kollisionswarnvorrichtung aufweisen, zum Erkennen von Hindernissen in wenigstens einer Fahrtrichtung des Arbeitsfahrzeugs und zum Ausgeben des Warnsignals, wenn ein Hindernis in dem Fahrweg des Arbeitsfahrzeugs erkannt wird.

Mit Hilfe der Kollisionswarnvorrichtung können Hindernisse in wenigstens einer Fahrtrichtung erkannt werden. Hierbei ist es besonders sinnvoll, wenn Hindernisse in beiden Fahrtrichtungen, also in Vorwärts- und in Rückwärtsfahrtrichtung erkannt werden können.

Die Kollisionswarnvorrichtung kann in geeigneter Weise ausgebildet sein und insbesondere Sensoren aufweisen, wie später noch erläutert wird. Insbesondere ist die Kollisionswarnvorrichtung dazu ausgebildet, die Eigenbewegung des Arbeitsfahrzeugs zu berücksichtigen, also die Fahrtrichtung und Fahrgeschwindigkeit sowie die Lenkrichtung. Zudem kann die Kollisionswarnvorrichtung die Fahrzeugabmessungen, insbesondere Länge und Breite des Fahrzeugs berücksichtigen, um auf diese Weise präziser erkennen zu können, ob eine Kollision mit einem Hindernis zu befürchten ist.

Durch die Miteinbeziehung der Fahrzeugeigenbewegung und der Fahrzeuggeometrie sowie auch durch die Berücksichtigung der Sensorpositionen am Fahrzeug kann sehr präzise prognostiziert werden, wie hoch das Kollisionsrisiko ist. Dabei ist es ebenso möglich, den Fahrweg als Fahrweg-Vorhersage bei Beibehaltung von Fahrtrichtung und Fahrgeschwindigkeit zu berücksichtigen. Dies ist insbesondere dann relevant, wenn das Hindernis als lediglich am Rand liegend erkannt wird und die Möglichkeit besteht, dass das Arbeitsfahrzeug das Hindernis passiert, ohne mit ihm zu kollidieren.

Die Kollisionswarnvorrichtung kann zwei Kollisionssensoren aufweisen, wobei einer der Kollisionssensoren an der einen Fahreinheit angeordnet ist und der andere Kollisionssensor an der anderen Fahreinheit angeordnet sein kann.

Die Kollisionswarnvorrichtung kann zwei Kollisionssensoren aufweisen, wobei einer der Kollisionssensoren an der einen Fahreinheit angeordnet ist und der andere Kollisionssensor an der anderen Fahreinheit angeordnet ist. Die jeweiligen Kollisionssensoren überwachen den Raum vor dem Arbeitsfahrzeug in Fahrtrichtung. Dementsprechend ist es möglich, dass immer derjenige Kollisionssensor aktiviert ist, der auf der ihn tragenden Fahreinheit in Fahrtrichtung vorne angeordnet ist, wobei die Fahreinheit in Vorwärtsrichtung fährt. Alternativ können auch beide Kollisionssensoren permanent aktiv sein und jeweils den Raum vor der jeweiligen Fahreinheit, also in Vorwärts- und Rückwärtsrichtung, überwachen.

Die Kollisionssensoren können ausgewählt sein aus der Gruppe Radarsensoren, Kamerasensoren, Ultraschallsensoren, Lidarsensoren (Light detection and ranging). Dabei ist es ohne weiteres möglich, auch mehrere Sensortypen miteinander zu kombinieren. So werden insbesondere Ultraschallsensoren eher für eine Nahbereichserkennung sinnvoll sein, während Radar- oder Lidarsensoren für eine Fernbereichserkennung genutzt werden.

Kamerasensoren sind in bekannter Weise mit einer entsprechenden Auswerteeinrichtung zu verbinden, die in der Lage ist, die von der Kamera gelieferten Bilder in vorgegebenen Kategorien auszuwerten und zu klassifizieren, um auf diese Weise Hindernisse zu erkennen. Derartige Auswerteeinrichtungen können ggfs. auch Kl-Vorrichtungen aufweisen (Künstliche Intelligenz).

Generell muss jedoch die Kollisionswarnvorrichtung nicht dazu ausgebildet sein, verschiedene Objekttypen, wie z.B. Personen, andere Fahrzeuge, Steinbrocken, zu differenzieren.

Eine Identifikation der einzelnen Objekte ist nicht erforderlich, anders, als dies z.B. bei Systemen zum autonomen Fahren für Kraftfahrzeuge der Fall ist. Die Kollisionswarnvorrichtung dient alleine der Kollisionsvermeidung und unterscheidet nicht, ob sich in Bewegungsrichtung des Arbeitsfahrzeugs ein Mensch, ein Gegenstand oder ein Felsbrocken befindet.

Die Kollisionswarnvorrichtung kann wenigstens einen Gierratensensor aufweisen. Der Gierratensensor kann insbesondere als Inertialmesseinheit (IMU) oder Inertialsensor ausgebildet sein und dient zum Erfassen der Gierrate der betreffenden Fahreinheit, auf der der Gierratensensor angebracht ist. So ist es auch möglich, dass beide Fahreinheiten jeweils einen eigenen Gierratensensor aufweisen.

Die Kollisionswarnvorrichtung kann wenigstens einen Geschwindigkeitssensor aufweisen. Der Geschwindigkeitssensor dient zum Erfassen der Fahrgeschwindigkeit bzw. Longitudinalgeschwindigkeit des Arbeitsfahrzeugs. Hierzu sind verschiedene Messprinzipien denkbar. Z.B. kann der Geschwindigkeitssensor als Drehzahlsensor am Abtrieb vorgesehen sein, zum Ermitteln der Fahrgeschwindigkeit aufgrund der Abtriebsdrehzahl, wobei unter Umständen bei bekanntem Übersetzungsverhältnis (Getriebe) und bekannter Radgeometrie (Durchmesser des Rads) aus der gemessenen Abtriebsdrehzahl die Fahrgeschwindigkeit berechnet werden kann.

Die Kollisionswarnvorrichtung kann wenigstens einen Lenkwinkelsensor aufweisen. Da es sich bei dem Arbeitsfahrzeug insbesondere um ein knickgelenktes Arbeitsfahrzeug handelt, kann der Lenkwinkelsensor dazu ausgebildet sein, den Winkel zwischen den beiden Fahreinheiten zu erfassen. Z.B. kann der Lenkwinkelsensor als Sensor zum Erfassen des Lenkwinkels am Knickgelenk (Winkelsensor) ausgebildet sein. Ebenso kann der Lenkwinkelsensor ein Sensor zum Erfassen des Zylinderhubs sein, der durch Aktuierung des zur Knicklenkung genutzten hydraulischen Zylinders bewirkt wird. Ebenso ist es möglich, den Lenkwinkel direkt am vom Fahrer bedienten Lenkrad abzugreifen.

Die Kollisionswarnvorrichtung kann eine mit den Sensoren gekoppelte Steuereinrichtung aufweisen, zum Erstellen einer Kollisionsvorhersage aufgrund von Informationen, die von den Sensoren übermittelt werden. Dementsprechend kann die Steuereinrichtung mit sämtlichen oben angegebenen Sensoren gekoppelt werden. Je mehr Sensoren ihre Information an die Steuereinrichtung liefern, desto präziser wird die Kollisionsvorhersage ausfallen können.

Zur Ermittlung der Kollisionsvorhersage ist die Steuereinrichtung geeignet, aufgrund der Informationen der Gierratensensoren und des Geschwindigkeitssensors die Fahrzeugeigenbewegung zu ermitteln und an die Kollisionssensoren bzw. z.B. den Radarsensor zu übergeben. Die Radarsensoren berücksichtigen dann bei ihrer Messung die Eigenbewegung des Fahrzeugs entsprechend.

Aufgrund der Ergebnisse des Radarsensors können durch die Steuereinrichtung Vorhersagen über die Bewegungspfade aller erkannten Objekte getroffen werden. Stillstehende Objekte werden als stillstehend erkannt, sich bewegende Objekte werden hinsichtlich ihrer Bewegungspfade (Bewegungsrichtung und Bewegungsgeschwindigkeit) erkannt.

Auf Basis verschiedener Parameter, wie z.B. dem Lenkwinkel (Lenkwinkelsensor) und der Fahrgeschwindigkeit (Geschwindigkeitssensor) kann eine Vorhersage des Bewegungspfads des Arbeitsfahrzeugs getroffen werden.

Mithilfe der Informationen der verschiedenen Sensoren lassen sich der zu überwachende Nahbereich und der zu überwachende Fernbereich berechnen. Insbesondere der Fernbereich ändert sich in Abhängigkeit vom Lenkwinkel, da vor allem der Fernbereich vom Bewegungspfad des Fahrzeugs abhängt, der wiederum durch den Lenkwinkel entscheidend bestimmt wird.

Nachfolgend kann durch die Steuereinrichtung eine Kollisionsvorhersage getroffen werden. Dabei werden insbesondere die kritischen Objekte erfasst, die sich dem Fahrzeug annähern bzw. denen sich das Fahrzeug annähert. Dabei kann auch eine Zeit berechnet werden, die zur Abwendung einer Kollision bleibt ("Time-to-Collision").

Nach Erkennung der kritischen Objekte, mit denen eine Kollision befürchtet werden muss, kann durch die Steuereinrichtung ein Warnsignal erzeugt werden, mit unterschiedlicher Qualität. Die Steuereinrichtung kann somit je nach Grad der Kollisionswahrscheinlichkeit ein dem Grad der Kollisionswahrscheinlichkeit entsprechendes Warnsignal erzeugen und damit vorgegebene Folgefunktionen bewirken.

Je nach Informationsgehalt des Warnsignals kann eine optische oder eine akustische Warnung erzeugt werden. Ebenso ist es möglich, einen Verzögerungseingriff in das Arbeitsfahrzeug zu bewirken, um eine Verminderung der Fahrgeschwindigkeit oder ein vollständiges Stoppen des Fahrzeugs zu erreichen.

Die Informationen über Warnung, möglicher Verzögerungseingriff, Position von kritischen Objekten können auch in geeigneter Weise an den Fahrer übermittelt werden. Dies ist z.B. möglich über eine Mensch-Maschine-Schnittstelle (HMI - Human-Machine-Interface), wie z.B. ein Display oder eine Warnlampe.

Diese und weitere Vorteile und Merkmale der Erfindung werden nachfolgend anhand von Beispielen näher erläutert. Es zeigen:
- **Fig. 1**: in schematischer Seitenansicht ein Arbeitsfahrzeug;
- **Fig. 2**: eine Kollisionswarnvorrichtung in schematischer Darstellung; und
- **Fig. 3**: den schematischen Aufbau einer deaktivierbaren Bremsassistenzvorrichtung.

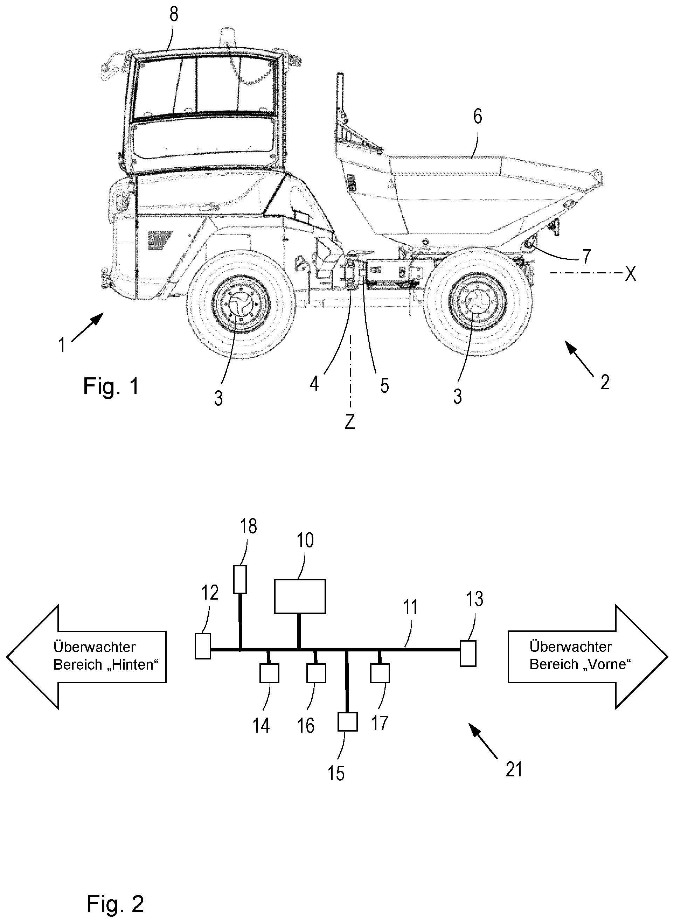

Fig. 1 zeigt in schematischer Darstellung einen knickgelenkten Dumper (Muldenfahrzeug) als Beispiel für ein erfindungsgemäßes Arbeitsfahrzeug. Als weitere Beispiele für das Arbeitsfahrzeug eignen sich auch Radlader, Teleskoplader o.ä.

Das Fahrzeug weist eine als erste Fahreinheit dienende Fahreinheit 1 und eine als zweite Fahreinheit dienende Muldeneinheit 2 auf, die jeweils eine starre Radachse 3 mit Rädern tragen. Zwischen der Fahreinheit 1 und der Muldeneinheit 2 ist ein Knickgelenk 4, im vorliegenden Fall sogar ein sogenanntes Knick-Pendel-Gelenk, angeordnet. Ein derartiges Knickgelenk 4 dient zum Koppeln der Fahreinheit 1 mit der Muldeneinheit 2 derart, dass die Fahreinheit 1 und die Muldeneinheit 2 sowohl um eine Hochachse Z als auch um eine Längsachse X relativ zueinander bewegbar bzw. verschwenkbar sind.

Die Verschwenkung um die Hochachse Z ermöglicht eine Lenkbewegung dadurch, dass die beiden Radachsen 3 zueinander in einem Winkel gestellt werden können (sogenannte KnickBewegung). Die Beweglichkeit um die Längsachse X wird auch als "Pendeln" bezeichnet und erhöht die Geländegängigkeit des Arbeitsfahrzeugs.

Die Verschwenkbewegung um die Hochachse Z wird durch eine Lenkvorrichtung bewirkt, die eine hydraulische Kolben-Zylinder-Einheit 5 umfasst. Mit Hilfe der Kolben-Zylinder-Einheit 5 kann die Winkelstellung zwischen der Fahreinheit 1 und der Muldeneinheit 2 eingestellt werden. Die Muldeneinheit 2 trägt eine Mulde 6 an ihrer Oberseite. Die Mulde 6 ist durch einen nicht dargestellten hydraulischen Schwenkmechanismus um eine Schwenkachse 7 verschwenkbar bzw. anhebbar. Dadurch kann die z.B. loses Schüttgut tragende Mulde 6 einfach entleert werden.

Auf der Fahreinheit 1 ist ein Fahrerschutzaufbau 8 aufgebaut, der als Kabine einen nicht dargestellten Fahrersitz umschließt. Der Fahrerschutzaufbau 8 wird unter anderem durch Bügel gebildet, die einen Überrollschutz bieten, wodurch eine ROPS/FOPS-Struktur verwirklicht ist.

Ein derartiges Arbeitsfahrzeug ist z.B. aus DE 20 2016 100 964 U1 und DE 10 2022 110 385 A1 bekannt und lässt sich durch eine Kollisionswarnvorrichtung ergänzen.

Das Arbeitsfahrzeug kann dabei auch derart ausgebildet sein, dass der Fahrersitz zwischen zwei Positionen verschwenkt werden kann. Der Fahrer kann so einerseits in Richtung der Mulde 6 (nach "vorne") blicken und in diese Richtung fahren. Der Fahrersitz kann aber auch um 180° geschwenkt werden, so dass der Fahrer eine freie Sicht hat und in diese Richtung (nach "hinten") fahren kann.

Fig. 2 zeigt den schematischen Aufbau einer Kollisionswarnvorrichtung 21.

Die Kollisionswarnvorrichtung 21 weist ein Steuergerät 10 auf, das über eine Kommunikationsinfrastruktur 11 mit verschiedenen Komponenten gekoppelt ist.

Die Kommunikationsinfrastruktur 11 stellt eine elektronische Verbindung der verschiedenen Sensoren und des Steuergeräts 10 zur Verfügung und kann z.B. mit Hilfe eines bekannten Fahrzeug-Bussystems (CAN-Bus) realisiert werden.

Weiterhin weist die Kollisionswarnvorrichtung 21 einen hinteren Radarsensor 12 und einen vorderen Radarsensor 13 zur Überwachung der Bereiche hinter und vor dem Arbeitsfahrzeug auf. Die Angabe "vorne" und "hinten" orientiert sich an einer Hauptfahrtrichtung des Fahrzeugs. Gegebenenfalls können die Richtungen auch umgekehrt werden.

Die Radarsensoren 12, 13 können in geeigneter Weise technisch ausgeführt werden. Insbesondere eignen sich dafür klassische Radarsensoren oder auch Lidar-Sensoren (Light Detection and Ranging), die ein dreidimensionales Laserscanning ermöglichen. Derartige Radarsensoren finden bereits bei Kraftfahrzeugen seit einiger Zeit Verwendung, z.B. für Abstandsregeltempomaten.

Die Kollisionswarnvorrichtung weist weiterhin einen Geschwindigkeitssensor 14 sowie einen Lenkwinkelsensor 15 auf. Der Geschwindigkeitssensor 14 ist dazu ausgebildet, die Längsgeschwindigkeit des Fahrzeugs zu erfassen. Dies ist z.B. möglich durch Erfassung der Drehzahl der Radachsen 3 bzw. der von den Radachsen getragenen Räder, deren Dimension (Durchmesser) bekannt ist, so dass daraus die Fahrgeschwindigkeit errechenbar ist.

Der Lenkwinkelsensor 15 kann insbesondere den Winkel der beiden Fahreinheiten 1, 2 zueinander erfassen und daraus den Lenkwinkel ableiten.

Sowohl die Fahreinheit 1 als auch die Muldeneinheit 2 (zweite Fahreinheit) tragen jeweils eine Inertialmesseinheit, nämlich eine hintere Inertialmesseinheit 16 (IMU) an der Fahreinheit 1 und eine vordere Inertialmesseinheit 17 (IMU) an der Muldeneinheit 2 (zweite Fahreinheit).

Die als Gierratensensoren dienenden Inertialmesseinheiten 16, 17 erfassen jeweils die Drehbewegung der ihnen zugeordneten Fahreinheit und erlauben so Rückschlüsse auf die Eigenbewegung des Arbeitsfahrzeugs.

Die beiden Radarsensoren 12, 13 sind in geeigneter Weise an den Stirnseiten des Fahrzeugs anzubringen, um ein möglichst freies Blickfeld auf die Bereiche vor und hinter dem Fahrzeug zu haben und um auf diese Weise Hindernisse mit großer Zuverlässigkeit erkennen zu können.

Das Steuergerät 10 ermittelt aufgrund der Informationen von den diversen Sensoren eine Einschätzung einer Kollisionswahrscheinlichkeit und gibt optional über ein Display 18 Informationen für den Fahrer am Fahrersitz.

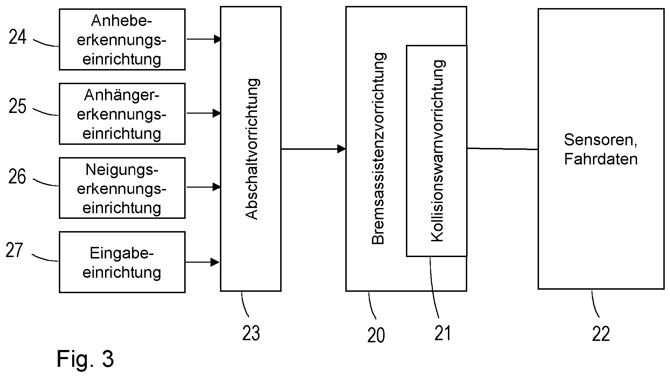

Fig. 3 zeigt den schematischen Aufbau einer Bremsassistenzvorrichtung 20, die die Kollisionswarnvorrichtung 21 nutzt, die der oben anhand von Fig. 2 erläuterten Kollisionswarnvorrichtung 21 entsprechen kann. Sie ist mit einer Sensorik 22 gekoppelt, die als Oberbegriff für verschiedene Sensoren sowie Fahrdaten bzw. Fahrinformationen gilt. Insbesondere kann die Sensorik 22 die oben anhand von Fig. 2 erläuterten Sensoren aufweisen.

Die Bremsassistenzvorrichtung 20 ist mit einer Abschaltvorrichtung 23 gekoppelt, derart, dass die Abschaltvorrichtung 23 die Bremsassistenzvorrichtung 20 deaktivieren kann. Das Deaktivieren bzw. Abschalten kann in unterschiedlicher Weise erfolgen und kann auch als "muten" (stummschalten) bezeichnet werden. Z.B. kann die Bremsassistenzvorrichtung vollständig abgeschaltet werden. Es kann aber auch lediglich eine Wirkung der Bremsassistenzvorrichtung temporär unterbunden werden, wie z.B. ein ungewolltes Abbremsen des Fahrzeugs oder das Ausgeben eines Warnsignals.

Die Abschaltvorrichtung 23 ist dazu mit mehreren Einrichtungen verbunden, um entsprechende Informationen zu bekommen, aus denen eine Abschaltbedingung abgeleitet werden kann. Dazu gehört eine Anhebeerkennungseinrichtung 24, eine Anhängererkennungseinrichtung 25, eine Neigungserkennungseinrichtung 26. Zudem ist eine Eingabevorrichtung 27 vorgesehen.

Die Anhebeerkennungseinrichtung 24 ist dazu ausgebildet, ein Anheben der Mulde 6 zu erkennen. Sie kann z.B. einen Positionsschalter aufweisen. Ebenso ist es aber auch möglich, ein z.B. vom Bediener über eine Bedieneinrichtung gegebenes Anhebekommando zum Anheben der Mulde zu interpretieren und daraus abzuleiten, dass die Mulde angehoben ist bzw. angehoben werden soll.

Die Anhängererkennungseinrichtung 25 dient zum Erkennen, dass ein Anhänger an das Arbeitsfahrzeug angekuppelt wurde. Hier kann z.B. eine nicht dargestellte Steckererkennungseinrichtung vorgesehen sein, die erkennt, dass ein Anhängerstecker an einer Buchse des Arbeitsfahrzeugs angesteckt ist.

Die Neigungserkennungseinrichtung 26 ist dazu ausgebildet, zu erkennen, dass das Arbeitsfahrzeug bergab fährt. Die Neigungserkennungseinrichtung 26 kann dementsprechend einen geeigneten Neigungssensor aufweisen, der eine Neigung des Arbeitsfahrzeugs relativ zur Horizontalen erkennt.

Die Erkennungseinrichtungen 24, 25, 26 sind mit der Abschaltvorrichtung 23 verbunden und können jeweils ein Signal liefern, das als Abschaltbedingung durch die Abschaltvorrichtung 23 interpretiert werden kann. Wenn wenigstens eine der Abschaltbedingungen vorliegt, kann die Abschaltvorrichtung 23 die Bremsassistenzvorrichtung 20 deaktivieren, sodass keine der von der Bremsassistenzvorrichtung bewirkbaren Maßnahmen eingeleitet wird. Die Bremsassistenzvorrichtung ist dann in einen "Mute"-Zustand versetzt.

Ergänzend ist eine Eingabeeinrichtung 27 vorgesehen, über die ein Bediener die Bremsassistenzvorrichtung 20 manuell abschalten bzw. "muten" kann. Die Abschaltung erfolgt dabei nicht über einen unbestimmten Zeitraum, sondern lediglich temporär. Zum Beispiel kann die Abschaltung so lange aufrechterhalten werden, wie der Bediener die Eingabeeinrichtung 27 betätigt. Ergänzend oder alternativ kann nach Betätigen der Eingabeeinrichtung 27 die Bremsvorrichtung für einen vorgegebenen Zeitraum deaktiviert werden, z.B. für zehn oder zwanzig Sekunden. Danach wird die Bremsassistenzvorrichtung wieder automatisch aktiviert und kann ihre Überwachungsfunktion erfüllen.

Auch dann, wenn die Erkennungseinrichtungen 24, 25, 26 eine Situation zum Abschalten der Bremsassistenzvorrichtung 20 erkannt haben, bedeutet das nicht zwingen, dass die Bremsassistenzvorrichtung 20 abgeschaltet wird. Vielmehr ist es möglich, dass der Bremsassistenzvorrichtung 20 nur in der Fahrtrichtung deaktiviert wird, in der die jeweilige Aktion erfolgt (Kippen der Mulde / Anhänger / Bergabfahrt). Auf der anderen, der Fahrtrichtung entgegengesetzten Seite bleibt die Bremsassistenzvorrichtung 20 aktiv.

Das Arbeitsfahrzeug kann mit einem Fahrersitz ausgestattet sein, der zwischen zwei Positionen verschwenkbar ist. Dabei kann der Fahrersitz alleine oder auch zusammen mit einer Konsole oder dem gesamten Fahrerschutzaufbau 8 verschwenkt werden. Entsprechend kann die Blickrichtung des Fahrers bzw. die Fahrtrichtung wahlweise nach vorne oder nach hinten gerichtet sein. Das System kann bei dieser Variante die Drehstellung des Sitzes erkennen und die Bremsassistenzvorrichtung 20 in die jeweilige Blickrichtung deaktivieren. In der anderen, entgegengesetzten Richtung kann die Bremsassistenzvorrichtung 20 aktiviert bleiben.

Das Abschalten bzw. Deaktivieren der Bremsassistenzvorrichtung 20 kann auf dem Display 18 angezeigt werden, um den Bediener über die (temporäre) Deaktivierung zu aktivieren. Dabei kann auch der Grund für das Abschalten angezeigt werden.

## Patentansprüche

1. Arbeitsfahrzeug, mit
- einer ersten Fahreinheit (1) und einer zweiten Fahreinheit (2);
wobei
- beide Fahreinheiten (1, 2) jeweils einen eigenen Antrieb aufweisen;
- eine der Fahreinheiten (1) einen Fahrersitz aufweist;
- die andere der Fahreinheiten (2) eine anhebbare Mulde (6) trägt;
- zwischen den beiden Fahreinheiten (1, 2) ein Gelenk (4) angeordnet ist, zum Koppeln der beiden Fahreinheiten (1, 2) derart, dass die beiden Fahreinheiten (1, 2) um wenigstens eine Hochachse (Z) des Arbeitsfahrzeugs relativ zueinander bewegbar sind;
- eine Bremsassistenzvorrichtung (20) vorgesehen ist, zum Erkennen fahrkritischer Situationen und zum Erzeugen eines Warnsignals, wenn eine fahrkritische Situation erkannt wurde; und wobei
- eine Abschaltvorrichtung (23) vorgesehen ist, zum automatischen Abschalten der Bremsassistenzvorrichtung (20), wenn eine Abschaltbedingung erfüllt ist.

2. Arbeitsfahrzeug nach Anspruch 1, wobei durch das Warnsignal wenigstens eine der folgenden Aktionen auslösbar ist:
- Erzeugen eines akustischen Signals;
- Erzeugen eines optischen Signals;
- Reduzieren der Fahrgeschwindigkeit;
- Stoppen des Arbeitsfahrzeugs.

3. Arbeitsfahrzeug nach einem der vorstehenden Ansprüche, wobei die Abschaltbedingung ausgewählt ist aus der Gruppe
- die Mulde (6) wird angehoben;
- das Arbeitsfahrzeug fährt bergab;
- ein Anhänger ist an dem Arbeitsfahrzeug angekuppelt;
- manuelle Abschaltung durch einen Bediener.

4. Arbeitsfahrzeug nach einem der vorstehenden Ansprüche, wobei das Erfüllen der Abschaltbedingung abhängig von der Fahrtrichtung ist, derart, dass die Abschaltbedingung nur dann als erfüllt gilt, wenn in der jeweiligen Fahrtrichtung ein Nicht-Abschalten der Bremsassistenzvorrichtung (20) zu einer Störung des Fahrbetriebs führen kann.

5. Arbeitsfahrzeug nach einem der vorstehenden Ansprüche, wobei
- ein automatisches Abschalten der Bremsassistenzvorrichtung (20) nur dann erfolgt, wenn keine Nicht-Abschaltbedingung erfüllt ist, auch wenn die Voraussetzungen zum Erfüllen der Abschaltbedingung gegeben sind; und wobei
- die Nicht-Abschaltbedingung ausgewählt ist aus der Gruppe
+ die Mulde (6) ist, in der aktuellen Fahrtrichtung gesehen, hinter dem Fahrersitz angeordnet;
+ der Anhänger ist, in der aktuellen Fahrtrichtung gesehen, hinter dem Arbeitsfahrzeug angekuppelt;
+ das Arbeitsfahrzeug fährt bergauf.

6. Arbeitsfahrzeug nach einem der vorstehenden Ansprüche, wobei
- eine Anhebeerkennungseinrichtung (24) vorgesehen ist, zum Erkennen von wenigstens einer angehobenen Position der Mulde (6); und wobei
- durch die Anhebeerkennungseinrichtung (24) die Abschaltbedingung als erfüllt gesetzt wird, wenn eine angehobene Position der Mulde (6) erkannt wird.

7. Arbeitsfahrzeug nach einem der vorstehenden Ansprüche, wobei
- eine Anhängererkennungseinrichtung (25) vorgesehen ist, zum Erkennen, dass ein Anhänger an dem Arbeitsfahrzeug angekuppelt ist; und wobei
- durch die Anhängererkennungseinrichtung (25) die Abschaltbedingung als erfüllt gesetzt wird, wenn erkannt wird, dass ein Anhänger angekuppelt ist.

8. Arbeitsfahrzeug nach einem der vorstehenden Ansprüche, wobei die Anhängererkennungseinrichtung (25) eine Steckererkennungseinrichtung aufweist, zum Erkennen, dass ein Anhängerstecker an einer Buchse des Arbeitsfahrzeugs angesteckt ist.

9. Arbeitsfahrzeug nach einem der vorstehenden Ansprüche, wobei
- eine Neigungserkennungseinrichtung (26) vorgesehen ist, zum Erkennen einer Neigung des Arbeitsfahrzeugs bei einer Bergabfahrt; und wobei
- durch die Neigungserkennungseinrichtung (26) die Abschaltbedingung als erfüllt gesetzt wird, wenn eine Bergabfahrt erkannt wird.

10. Arbeitsfahrzeug nach einem der vorstehenden Ansprüche, wobei eine Abschaltanzeigeeinrichtung vorgesehen ist, zum Anzeigen von wenigstens einem der folgenden Betriebszustände:
- die Bremsassistenzvorrichtung (20) ist abgeschaltet;
- eine Abschaltbedingung ist erfüllt;
- wenigstens eine der Abschaltbedingungen, die erfüllt sind.

11. Arbeitsfahrzeug nach einem der vorstehenden Ansprüche, wobei die Bremsassistenzvorrichtung (20) eine Kollisionswarnvorrichtung (21) aufweist, zum Erkennen von Hindernissen in wenigstens einer Fahrtrichtung des Arbeitsfahrzeugs und zum Ausgeben des Warnsignals, wenn ein Hindernis in dem Fahrweg des Arbeitsfahrzeugs erkannt wird.

12. Arbeitsfahrzeug nach einem der vorstehenden Ansprüche, wobei
- die Kollisionswarnvorrichtung (21) zwei Kollisionssensoren (12, 13) aufweist; und wobei
- einer der Kollisionssensoren (12) an der einen Fahreinheit (1) angeordnet ist und der andere Kollisionssensor (13) an der anderen Fahreinheit (2) angeordnet ist.
